# EUROPEAN PATENT APPLICATION

(11) **EP 2 865 924 A1**
(43) Date of publication of application: **29.04.2015**
(21) Application number: 13425140.4
(22) Date of filing: 23.10.2013
(51) Int. Cl.: F16H 48/30

(54) **Differential device for motor vehicles**

(71) Applicant: Nanotek S.R.L., 08023 Fonni (NU) (IT)
(72) Inventor: Coccollone, Franco, 08023 Fonni (NU) (IT)
(74) Representative: Bruni, Giovanni

(57) **Abstract**

Differential device comprising two epicycloidal reduction gears 1, each one mounted on a driven axle, comprising a sun gear 2 which transmits the input motion, a spider (9) which transmits the output motion and a plurality of side pinions 10 mounted on said spider 9 and servo-controlled gearing means (4, 4', 8, 7, 2, 2') comprising at least two toothed wheels (7, 2, 2') one for each driven axle and integral with the spider 9, wherein said gearing means vary the rotation speed of each driven axle independently of each other.

## Description

The present invention relates to a new differential device for motor vehicles. In the motor vehicles and other vehicles, the differential device is a mechanic organ which distributes a torque between two or more driving wheels. It is usually made up of a spider cage to which two axles are constrained. On both the axles there are arranged two side pinions meshing with two crown wheels (conical gears) integral with the half shafts. In addition to transforming the longitudinal motion of the driving shaft in transverse motion of the wheels, the differential device is needed also to avoid that the wheels skid in curve by adapting their speed to the length of the trajectory. In fact, the differential device in straightaway motion transmits the same number of revolutions to the wheels, while in curve the inner wheel can reduce the revolutions and transfer them to the outer one.

In other words, the differential device is a gearing interposed between the driving axles of a vehicle aiming at distributing, to each of them, its own speed according to its own trajectory.

This kind of differential is the simplest one and the most diffused one both in design and mechanically, and is also defined as "open" differential device.

In particular said device is made up mainly of a small diameter pinion and a great diameter crown with the function of transferring the torque from the driving shaft to the driven shafts and of realizing a reduction ratio. To the crown it is fixed the differential device carrier inside which two crown wheels, mounted frontally on their rotation axis, are integral with the half axles and with the wheels. Between the two crown wheels there are two or four side pinions which are integral with the carrier in its rotation motion but are free to turn around their own axis, and their motion transmits the revolutions from a crown wheel to the other one. The two crown wheels receive the motion from the side pinions which rotate in revolution because they are integral with the carrier. The revolution transfer from a crown wheel to the other one occurs when one of the two wheels meets a resistance in the advancement and impresses a rotation motion to the side pinions on its own axis.

A disadvantage of the differential device of open kind occurs when one of the wheels looses adherence totally. In this case, the differential device transfers on this one all the revolutions and annuls the advancement of the other wheel, thus causing the vehicle stop.

In order to solve this problem, the differential device is blocked by binding in an integral way one of the crown wheels to the carrier, thus obliging the two wheels to make the same number of revolutions. Therefore the two wheels have to cover the same trajectory otherwise one of the two wheels is dragged.

At the state of the art, there are known various types of self-blocking mechanical differentials as for example the one with viscous joint, the laminar one and Torsen type one. Recently, in the series production it has also come out the electronic differential, which exploits the potentialities of the ESC system, electronic stability control, combined with a traditional differential device. The strategy is to brake the wheel skidding by slowing it down and preventing the other one to be blocked; in this way, a portion of the torque supplied by the engine is transmitted to the ground without using other mechanical means on the transmission.

Another type of differential device known at the state of the art is the Ferguson joint or viscous joint. This type of differential device is simple and compact, and it is often used on motor vehicles with four driving wheels because of its efficiency and reliability. Its structure connects the inner mechanical portions by means of a silicone fluid. It is realized inside a sealed container which houses the input shaft and the output one, not connected between each other, but provided with a long series of opposed lamellae, very near and immersed in the fluid. This latter itself allows to transmit the motion among the lamellae as they were almost integral between each other. The silicone fluid, in "normal" condition, expands increasing its volume while the temperature, which is generated by varying the relative speed between the shafts, increases; as effect of the expansion of its volume it compresses the lamellae and connects the input shaft with the output shaft, and the differential device blocking continues until the fluid temperature returns to a predetermined temperature.

A disadvantage of the present differential device is that the liquid heating and cooling times delay the differential to be blocked and unblocked. Moreover, at the state of the art it is known a variation of this latter type of differential device known as Haldex clutch, which uses a control system able to control the blockage, in each operative condition. The attenuation is obtained by means of a piston which compresses the lamellae, by causing them to be blocked.

Similar in form and outer volume to the traditional differential device is another known differential device, i.e. the laminar self-blocking differential device in which the input torque is not transmitted directly to the side pinions but passes through anchoring stocks. The self-blocking provides that the four side pinions can move along the inclined grooves of the anchoring stocks. Therefore, when the two driven shafts rotate at different speed, the side pinions are subjected to a side thrust which obliges them to go back on the slope of the stock grooves. These latter, as being parallel opposed, tend to go away axially between each other, and annulling the preexistent small "clearance", compress the lamellae packs at the means sides. The opposed lamellae are of two types, with outer or inner toothing; the first ones are integral with the carrier while the second ones with the crown wheels. The mechanism becomes self-blocking only if the central core expands axially by pressing on the lamellae and this occurs when on the wheels the speed and the torque are different by a certain value.

Another type of differential device is the TorSen (Torque Sensitive, i.e. sensitive to the torque), which is used on the driving wheels of a motor vehicle to distribute the torque between the two wheels without ever blocking the half axles as a whole. This differential device is made up of two crown wheels with helical toothing, integral with the half axles, and of two or more couples of side pinions integral with the carrier, oriented in transversal way with respect to the crown wheel axles, with helical toothing as well meshing with the crown wheel toothing. Each side pinions couple has at its ends a straight toothed gear, which connects it to the side pinions connected to the opposed crown wheel. When a crown wheel makes more rotations of the opposed crown wheel, it makes the side pinions on its own axis rotate, thus transferring all the torque on the other crown wheel.

A disadvantage of the present differential device is that it is cumbersome with respect to the traditional differential device and little sensitive in differentiating revolutions.

Therefore there exists the need to provide a differential device which can give to each single wheel, independently, the revolutions needed to cover a trajectory, in order to solve the drawbacks of the known systems.

An object of the present invention is a mechanically controlled differential device which gives to each single wheel the revolutions needed to cover a determined trajectory. This is applied to motor vehicles with two, four or more driving wheels, without using central distribution units.

A first embodiment of the present invention is based on two epicycloidal reduction gears, opposed between each other, the two sun gears receive the motion in equal measure by a crown arranged on their rotation axis, which follows the motion given by a pinion. Each spider is constrained to a conical toothed gear. In the system, there are two crown opposed between each other. Between the crowns it is interposed a pinion anchored to the box, which, by rotating on its own axis, makes the crowns rotating in counter direction with respect to each other, i.e. it allows to transfer the revolutions from the one to the other one.

An advantage of said first embodiment is that this functioning is comparable to the differential device of open type, in which, anyway, there is a pinion by which the rotation motion can be divided between the two axles. In order to have the revolution transfer to be blocked from a wheel to the other one, it is sufficient that the pinion is blocked in its rotation motion. To obtain an automatic self-blocking, a Ferguson or Haldex joint is applied to the pinion.

Another advantage of said embodiment is that by intervening on the pinion with a rotation motion, generated by an electric or hydrodynamic engine, controlled in the number of revolutions by the steering angle set by the steering wheel, it is obtained the rotation transfer from a half axles to the other one. With this system it is possible to give the advancement on the predetermined trajectory to the single wheels.

Another advantage is that, in case one of the two wheels covers a trajectory without adherence (for ex. lifted from the surface) it is constrained to make the revolutions set by the steering angle.

The independent claims describe particular and further advantageous aspects of the invention.

The embodiments of the invention will be better described by means of the examples, with reference to the appended drawings, in which:
Figure 1 shows an axonometric view of a differential device according to a first embodiment of the present invention.
Figure 2 shows an axonometric exploded view of a differential device according to another embodiment of the present invention.
Figure 3 shows an axonometric view of a differential device according to the embodiment of fig. 2, in which there are shown the inner organs of the epicycloidal reduction gear.

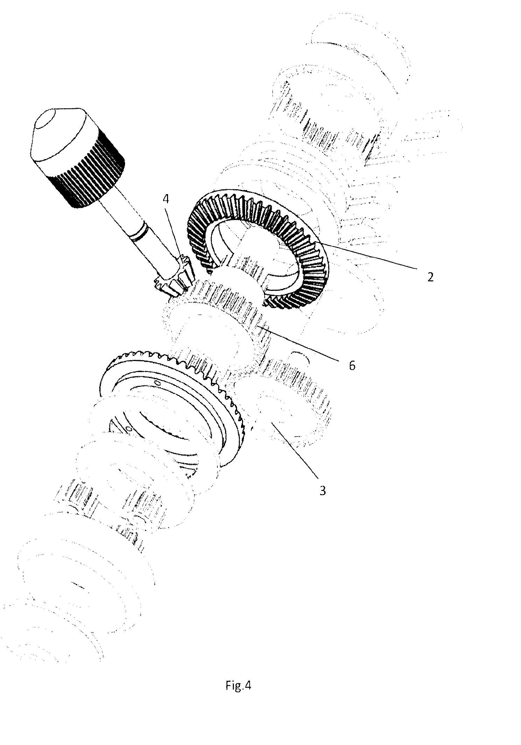

Figure 4 shows an axonometric view of a differential device according to the embodiment of fig. 2, in which there are shown the side pinions positioned on the spider.
Figure 5 shows an axonometric view of the hooks which block the pinion according to an embodiment of the present invention.

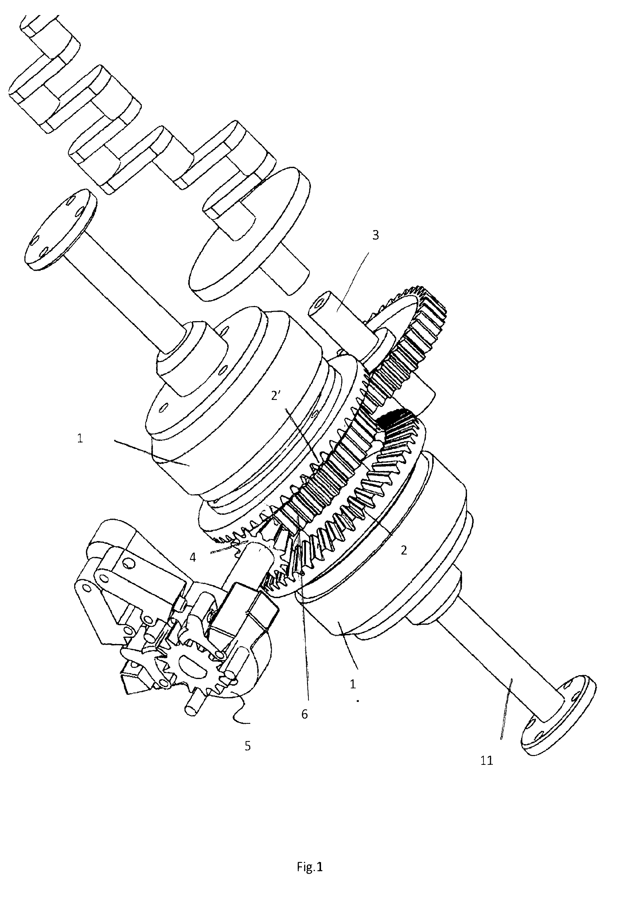

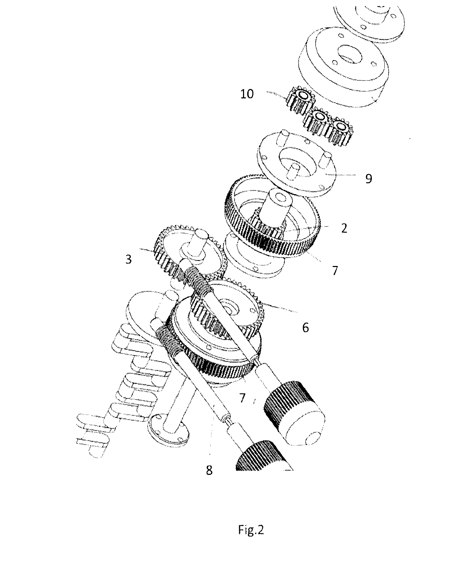

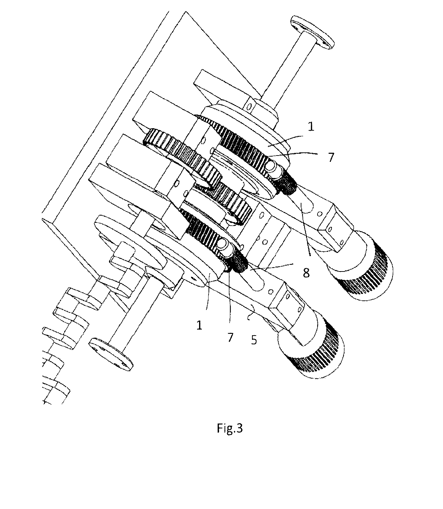

Referring to figure 1, the differential device comprises two epicycloidal reduction gears 1, opposed between each other. The two sun gears 2 receive the motion in equal measure from a crown 6 arranged on their rotation axis 11, which follows the motion given by a pinion 3. Each spider 9 (figs. 2, 3) is constrained to a gear with conical toothing 2, 2'. Therefore, in the system there are two crowns 2, 2' opposed between each other. Between the crowns it is interposed a pinion 4 anchored to the box 5, which, by rotating on its own axis, makes the crowns 2, 2' rotating in counter direction between each other, i.e. it allows to transfer the revolutions from a crown 2 to the other crown 2'. The crowns 2, 2' of the epicycloidal reduction gears 1 are integral with the half axles through the side pinions 10 (figs. 2,3).

In order to obtain that the revolutions transfer from a wheel to the other one is blocked, it is sufficient to block the pinion 4 in its rotation motion. In order to obtain an automatic self-blocking to the pinion 4, 4' it can be applied a Ferguson or Haldex joint.

By imposing to the pinion 4, 4' a rotation motion, generated by an electric or hydrodynamic engine, controlled in the number of revolution by the steering angle set by the steering wheel, it is obtained the rotation transfer from a half axle to the other one. With this system it is possible to give the advancement on the predetermined trajectory to the single wheel.

In case one of the two wheels covers a trajectory without adherence (for ex. lifted from the surface) it is constrained to make the revolutions set by the steering angle.

Referring to figs. 2, 3, the differential device comprises two epicycloidal reduction gears 1, opposed between each other. The two sun gears 2 receive the motion in equal measure from a crown 6 arranged on their rotation axis 11, which follows the motion given by a pinion 3. Each spider 9 (figs. 2, 3) is constrained to a gear with helical toothing 7, which meshes with a worm screw 8, fixed at the box 5 and so not able to move axially. Said screw 8 prevents in turn the spider 9 to rotate.

By giving a rotation motion to the worm screw 8, by means of electric or hydrodynamic engines controlled in the number of revolutions by the steering angle, it is possible to increase or reduce the revolutions of a single crown 7 without transferring or taking them from the other one. This kind of differential device does not transmit the revolutions from a wheel to the other one of the vehicle.

For example, in a motor vehicle provided with four driving wheels which makes a left curve, the four wheels go in different trajectories: the inner wheels (left side) make less revolutions than the outer ones (right side) as well as the back axis with respect to the front one. The differential device, object of the present invention, acts maintaining the nominal revolutions given to the right front wheel and subtracting the revolutions in the measure due to the other three without using a central distributing unit.

In case one or more wheels cover a trajectory without adherence (for ex. lifted from the surface) they remain constrained to make the revolutions set by the steering angle. The motor vehicles provided with common differential devices, when changing trajectory, lever only with the directional (steering) wheels while the ones provided with a differential device according to the present invention are also helped by a lever generated by the thrust of the outer wheels and by the inner ones.

Therefore the differential device object of the present invention is provided with stability and braking control.

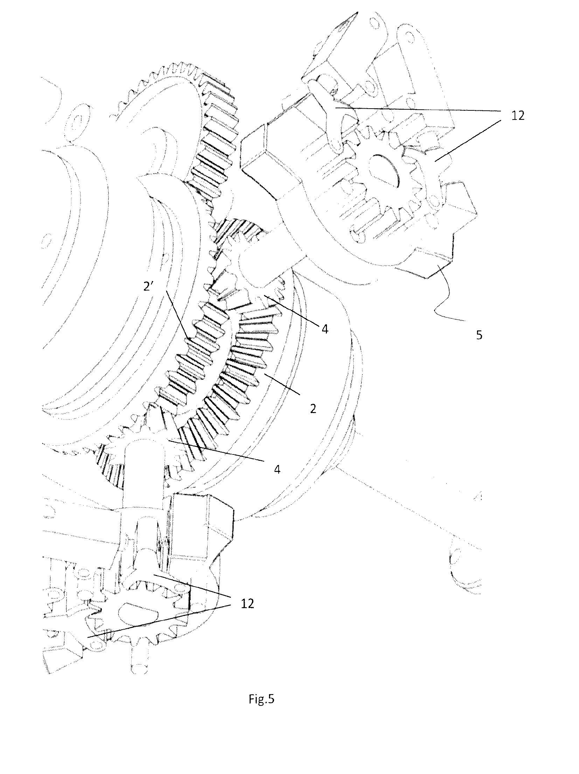

Referring to fig. 5, the differential device comprises at least a couple of pinions 4 and at least a couple of crowns (2, 2', 7) having independent motion between each other. At least a pinion 4, 4' can be blocked in its rotation motion by two hooks 12 (one for each rotation direction), which, operated by an actuator (pneumatic, electric or hydraulic one) limit the rotation motion of the pinion in unidirectional direction. This system allows the wheel to make a greater trajectory, to make the needed revolutions, but it cannot make less revolutions than those given by the driving shaft. It is to say, the wheel can make more revolutions than the other one, but it is constrained to make at least the same revolutions as the other one.

For example, in a system with more traction axes, the front axes can release both the wheels allowing them to make a greater trajectory, but maintaining the constrain to rotate at the number of revolutions given by the driving shaft.

When the thrust of the wheels is greater than the one of the driving shaft (for ex. in descending step), the system inverts, by means of the hooks 12, the block direction of the pinion 4, and so of the spider 9, and the wheel or the axis making a smaller trajectory is released from making less revolutions.

The total block is obtained by blocking the pinions 4, 4' in both directions by means of both hooks 12. The present invention is applied in particular in self-propelled vehicles and in agricultural machines.

While both in the summary and the detailed description has been described at least an embodiment of the present invention, it is to be understood that many variations are possible in the scope of the invention. Moreover, it is intended that the embodiments described are only examples not limiting the scope of the invention or its applications or configurations. Moreover, the summary and detailed description provide those skilled in the art with a convenient guide to implement at least an example embodiment, while being clear that there are many possible variations in the function and assembly of the elements here described, without departing from the scope of the invention as defined in the appended claims and technical-legal equivalents thereof.

## Claims

1. Differential device comprising:
- two epicycloidal reduction gears 1, each one mounted on a driven axle, comprising a sun gear 2 which transmits the input motion, a spider (9) which transmits the output motion and a plurality of side pinions 10 mounted on said spider 9;
- servo-controlled gearing means (4, 4', 8, 7, 2, 2') comprising at least two toothed wheels (7, 2, 2') one for each driven axle and integral with the spider 9, wherein said gearing means vary the rotation speed of each driven axle independently of each other.

2. Device according to claim 1, wherein said gearing means are two crowns (2, 3') meshing with a pinion (4, 4') which, while rotating on its own axis, make the crowns (2, 2') rotating in counter direction with respect to each other.

3. Device according to claim 2, wherein said crowns (2, 2') of the epicycloidal reduction gears (1) are integral with the half axles through the spider (9).

4. Device according to claim 1, wherein said gearing means are a helical toothed gear (7) meshing with a worm screw (8).

5. Device according to claim 2, wherein at least a pinion (4, 4') is blocked in its rotation motion by two hooks (12), one for each rotation direction.
